# EUROPÄISCHE PATENTSCHRIFT

(11) **EP 2 681 988 B1**
(45) Veröffentlichungstag und Bekanntmachung des Hinweises auf die Patenterteilung: **06.05.2015**
(21) Anmeldenummer: 13003412.7
(22) Anmeldetag: 05.07.2013
(51) Int. Cl.: A01G 3/053, H02K 7/02, H02K 7/14, F16H 57/025

(54) **Tragbares, elektrisches Arbeitsgerät**
Portable electrical tool
Appareil de travail électrique portable

(30) Priorität: 06.07.2012 DE 102012013321
(43) Veröffentlichungstag der Anmeldung: 08.01.2014
(73) Patentinhaber: Andreas Stihl AG & Co. KG, 71336 Waiblingen (DE)
(72) Erfinder: Untermann, Arne, D-73630 Remshalden (DE); Maier, Markus, D-71397 Leutenbach (DE); Hamersmit, Ante, D-71334 Waiblingen (DE); Renz, Christian, D-88400 Biberach (DE); Menzel, Johannes, D-73529 Rechberg (DE); Schneider, Ina, D-70178 Stuttgart (DE); Luz, Jochen, D-71336 Waiblingen (DE); Klöker, Jens, D-71336 Waiblingen-Bittenfeld (DE); Mang, Harald, D-71364 Winnenden (DE); Hampe, David, D-70191 Stuttgart (DE); Krätzig, David, D-71642 Ludwigsburg (DE)
(74) Vertreter: Wasmuth, Rolf

(56) Entgegenhaltungen:
- EP-A1- 2 189 055
- EP-A2- 0 950 833
- EP-A2- 1 329 612
- WO-A1-2011/154041
- DE-U- 1 917 103

## Beschreibung

Die Erfindung betrifft ein tragbares Arbeitsgerät mit einem Gehäuse und einem Arbeitswerkzeug, das über ein Getriebe von einem Elektromotor angetrieben ist, nach dem Oberbegriff des Anspruchs 1.

Aus der DE 1 917 103 U ist ein als Heckenschere ausgebildetes Arbeitsgerät bekannt, bei dem das Getriebe zum Antrieb der Schneidmesser von einer Welle angetrieben ist, auf der ein Schwungrad befestigt ist. Die Rotationsachse des Schwungrades und die Hauptdrehachse des Getriebes liegen rechtwinklig zueinander, wobei ein Antriebsritzel des Antriebs ein schräg verzahntes Tellerrad des Getriebes antreibt. Die bei einer Heckenschere auftretenden Belastungen beim Schneidvorgang oder bei einem eventuellen Blockieren der Messer müssen von den Lagern des Antriebs abgefangen werden.

Bei elektrischen Heckenscheren ist der antreibende Elektromotor im Gehäuse des Arbeitsgerätes angeordnet, wobei der Aufbau und die Auslegung des Elektromotors so vorgesehen sind, dass die im Betrieb der Heckenschere durch die Schneidgarnitur und das Getriebe bedingten Lagerbelastungen von den Lagern des Elektromotors aufgenommen werden können. Die Elektromotoren und dessen Lager sind dem Einsatz als Heckenscherenantrieb entsprechend ausgelegt.

Der Erfindung liegt die Aufgabe zugrunde, ein tragbares Arbeitsgerät nach dem Oberbegriff des Anspruchs 1 derart weiterzubilden, dass bei kompakter Bauweise die Lagerbelastungen des Antriebs von einem Elektromotor der Antriebseinheit ferngehalten werden können.

Die Aufgabe wird nach den Merkmalen des Anspruchs 1 gelöst.

Zunächst ist vorgesehen, die Abtriebswelle und das Schwungrad über zwei Lagerstellen im Gehäuse zu lagern. Dabei sind die Rotationsachse des Schwungrades und eine Motorwelle des Elektromotors derart ausgerichtet, dass sie etwa gleichachsig zueinander liegen. Die Motorwelle des Elektromotors wird drehfest mit dem Schwungrad verbunden und der Elektromotor selbst im Gehäuse nur über eine Drehmomentstütze abgestützt.

Da der Elektromotor nur über eine Drehmomentstütze abgestützt ist, und neben der Festlegung der Motorwelle am Schwungrad keine weitere Fixierung innerhalb des Gehäuses des Arbeitsgerätes erfährt, bleiben die Lager des Elektromotors im Wesentlichen frei von Radialkräften des Getriebes, so dass für den Antrieb des Getriebes im Arbeitsgerät einfache Standardmotoren verwendet werden können. Die Drehmomentstütze stellt sicher, dass der Stator des Elektromotors beim Anlaufen nicht dreht; die Drehmomentstütze gewährleistet die Abgabe des Drehmomentes vom Elektromotor auf das Getriebe, ohne dass eine radiale oder axiale Stoßbelastung der Motorlager auftritt.

Zweckmäßig liegen die Lagerstellen in Richtung der Motorwelle mit Abstand zueinander, so dass eine sichere Abstützung von Radialkräften im Getriebe erzielt ist.

Die Motorwelle ist axial unverlierbar mit dem Schwungrad verbunden, wobei die Motorwelle in eine Nabe der Schwungscheibe eingesteckt ist. Durch das Einstecken der Motorwelle in die Nabe wird nicht nur eine Antriebsverbindung hergestellt, sondern auch eine axiale Fixierung des Elektromotors im Gehäuse erfolgt. Die Montage des Elektromotors im Gehäuse durch einfaches Einstecken der Motorwelle in das Schwungrad stellt sicher, dass die Drehachse der Motorwelle gleichachsig zur Rotationsachse des Schwungrades liegt, ohne dass durch einen eventuellen Achsversatz die Lager des Motors oder des Getriebes belastet werden.

Die Drehmomentstütze im Gehäuse wird zweckmäßig von einer Lagerplatte des Elektromotors gebildet, die drehfest im Gehäuse liegt. Die Lagerplatte kann durch Eingriff eines Gehäusevorsprungs oder dgl. in einfacher Weise in Umfangsrichtung abgestützt werden, ohne dass Axial- oder Radialkräfte auf die Motorwelle ausgeübt werden. Hierzu sind im Umfang der Lagerplatte eine oder mehrere Aussparungen vorgesehen, in die Vorsprünge des Gehäuses einragen.

Wird die Lagerplatte aus einem elastischen Material gefertigt, ist die Drehmomentstütze eine elastische Drehmomentstütze mit dem Effekt, dass Stöße und Schläge im Antriebsstrang gedämpft werden.

Die Lagerplatte ist zweckmäßig zwischen dem Elektromotor und der Schwungscheibe angeordnet, wobei die Lagerplatte insbesondere auf der Stirnseite des Elektromotors festgelegt ist. Das Schwungrad bildet dabei ein Drehmoment übertragendes Verbindungsglied zwischen der Abtriebswelle einerseits und der Motorwelle des Elektromotors andererseits.

Das Schwungrad ist in einem im Gehäuse ausgebildeten Rotationsraum aufgenommen, während das Getriebe in einem im Gehäuse ausgebildeten Getrieberaum aufgenommen ist. Dabei bildet die Lagerplatte vorteilhaft eine den Rotationsraum zum Elektromotor abgrenzende Wand.

Der Rotationsraum des Schwungrades ist vorteilhaft in einem Geräteträger des Gehäuses vorgesehen, wobei eine Umfangswand des Rotationsraums zumindest teilweise einteilig am Geräteträger ausgebildet ist.

In einer zweckmäßigen Ausgestaltung der Erfindung ist die Umfangswand über einen ersten Wandabschnitt am Grundträger ausgebildet und ein zweiter Wandabschnitt der Umfangswand an einem getrennten Gehäuseteil vorgesehen, der beim Zusammensetzen des Gehäuses die Umfangswand des Rotationsraums im Grundträger ergänzt, vorzugsweise schließt.

Eine der Lagerstellen ist durch ein im Boden des Rotationsraums angeordnetes Lager gebildet, wobei das Lager zweckmäßig den Rotationsraum zu dem Getrieberaum verschließt. Eine weitere Lagerstelle kann durch ein in einer Gegenplatte gehaltenes Lager gebildet sein, der am Geräteträger befestigt ist.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Ansicht einer elektrisch angetriebenen Heckenschere,
- Fig. 2: einen Schnitt durch das Arbeitsgerät längs der Linie II-II in Fig. 1 und entferntem Gehäuse,
- Fig. 3: eine Ansicht in Richtung des Pfeils III in Fig. 2 auf einen im Gehäuse aufgenommenen Grundträger der Antriebseinheit,
- Fig. 4: eine Seitenansicht eines Heckenschneiders,
- Fig. 5: eine Teilansicht auf den Antriebskopf des Heckenschneiders gemäß Einzelheit V in Fig. 4,
- Fig. 6: einen Schnitt durch den Antriebskopf des Heckenschneiders längs der Linie VI-VI in Fig. 5.

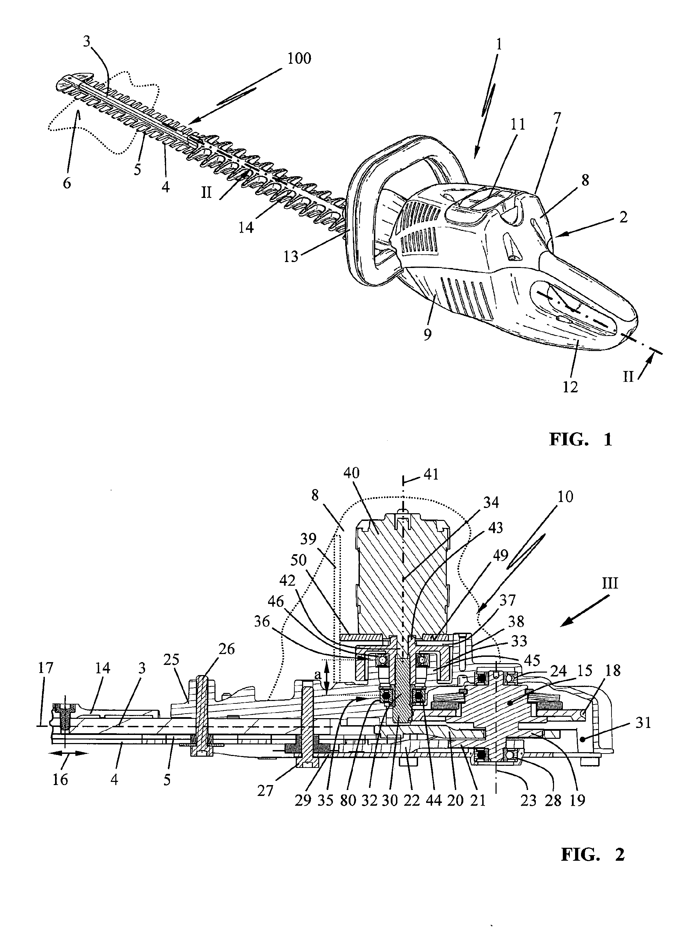

Das in Fig. 1 dargestellte tragbare Arbeitsgerät 1 ist eine Heckenschere 2. Das Arbeitsgerät 1 weist als Arbeitswerkzeug 100 einen Messerbalken 3 mit zwei hin- und hergehenden Schneidmessern 4 und 5 auf, die eine Schnittebene 6 bestimmen. An einem Ende des Messerbalkens 3 ist in einem Gehäuse 7 eine Antriebseinheit 10 aufgenommen, wie sie in Fig. 2 dargestellt ist.

Das Gehäuse 7 weist ein Gehäuseoberteil 8 und ein Gehäuseunterteil 9 auf, die die an einem Grundträger 25 montierte Antriebseinheit 10 umgeben. Im Gehäuse 7 ist im gezeigten Ausführungsbeispiel ein Aufnahmeschacht für einen Akku 11 vorgesehen; die elektrische Heckenschere 2 ist eine Akkuheckenschere.

Zum Halten und Führen des Arbeitsgerätes 1 sind am Gehäuse 7 ein in Längsrichtung des Arbeitsgerätes hinterer Handgriff 12 und ein im vorderen Bereich des Gehäuses 7 angeordneter Bügelgriff 13 vorgesehen. Im gezeigten Ausführungsbeispiel ist auf dem Messerbalken 3 ein Schnittschutz 14 befestigt.

Wie in Fig. 2 dargestellt, sind die am Messerbalken 3 gehaltenen Schneidmesser 4 und 5 von der Antriebseinheit 10 über ein symbolisch als Kurbeltrieb dargestelltes Getriebe 15 in Richtung des Doppelpfeils 16 hin- und hergehend angetrieben. Die Bewegungsbahn der Schneidmesser 4 und 5 verläuft dabei in Längsrichtung des Messerbalkens 3, also parallel zu seiner Längsmittelachse 17.

Das Getriebe 15 besteht aus zumindest einem Getrieberad 18, welches von einem Antriebsritzel 30 angetrieben ist. Auf der einen Stirnseite des Getrieberades 18 sind drehfest zwei Antriebsnocken 19 und 21 vorgesehen, die jeweils ein Pleuel 20, 22 antreiben. Jedes Pleuel ist an seinem Ende mit einem zugeordneten Schneidmesser 4, 5 antriebsverbunden, wobei im gezeigten Ausführungsbeispiel nach Fig. 2 das Pleuel 20 das obere Schneidmesser 5 und das Pleuel 22 das untere Schneidmesser 4 antreibt.

Das Getriebe 15 liegt in dem Grundträger 25, an dem mittels Befestigungsschrauben 26, 27 der Messerbalken 3 festgelegt ist. Die Hauptdrehachse 23 des Kurbeltriebs ist an einem Ende in einem Lager 24, insbesondere einem Wälzlager, im Grundträger 25 gehalten, während das andere Ende der Hauptdrehachse 23 in einem weiteren Lager 28 gehalten ist, welches in einer am Grundträger 25 festgelegten Abschlussplatte 29 gehalten ist. Das Getriebe 15 ist in einem Getrieberaum 31 angeordnet, welcher im Grundträger 25 ausgebildet und von der Abschlussplatte 29 verschlossen ist.

Das mit dem Getrieberad 18 kämmende Antriebsritzel 30 der Antriebseinheit 10 ist am Ende einer Abtriebswelle 32 angeordnet, die in den Getrieberaum 31 ragt. Die Abtriebswelle 32 trägt an dem anderen, dem Antriebsritzel 30 gegenüberliegenden Ende ein Schwungrad 33, welches zusammen mit der Abtriebswelle 32 um eine Rotationsachse 34 dreht. Die Abtriebswelle 32 und das Schwungrad 33 sind über zwei Lagerstellen 35 und 36 im Grundträger 25 des Gehäuses 7 gelagert, die vorzugsweise mit Abstand a zueinander liegen. Dabei liegt das Schwungrad 33 zwischen dem Getrieberaum 31 und einem Elektromotor 40 in einem Rotationsraum 37. Der Rotationsraum 37 ist einerseits vom Grundträger 25 begrenzt, an dem auch ein Teil der Umfangswand 38 des Rotationsraums 37 ausgebildet ist. Am Gehäuseoberteil 8 des Gehäuses 7 ist ein innerer Wandabschnitt 39 ausgebildet, der die Umfangswand 38 des Grundträgers 25 ergänzt und in Umfangsrichtung schließt. Die Umfangswand 38 und der Wandabschnitt 39 erstrecken sich über die Höhe des Schwungrades 33 und begrenzen den Rotationsraum 37 in Umfangsrichtung.

Die eine, erste Lagerstelle 36 ist von einem Lager 46 gebildet, welches bevorzugt als Wälzlager ausgebildet ist. Das Lager 46 ist gleichachsig zur Rotationsachse 34 des Schwungrades 33 angeordnet und liegt im Ende eines zylindrischen Doms 45, der sich über eine Teilhöhe der Nabe 43 des Schwungrades 33 erstreckt. Das Schwungrad 33 übergreift den Dom 45, wobei sich die Nabe 43 des Schwungrades 33 etwa über die gesamte Höhe der Umfangswand 38 erstreckt. Der Außenring des Lagers 46 ist im gehäusefesten, zylindrischen Dom 45 gehalten, während der Innenring des Lagers 46 von der Nabe 43 des Schwungrades durchragt ist. Die erste Lagerstelle 36 bildet somit ein Lager 46 für das Schwungrad 33. Die erste Lagerstelle 36 liegt vorzugsweise im Rotationsraum 37.

Die zweite Lagerstelle 35 ist von einem Lager 44 gebildet, welches in der Trennwand zwischen dem Rotationsraum 37 und dem Getrieberaum 31 vorgesehen ist, also im Boden des Rotationsraumes 37 liegt. Hierzu ist im Boden eine Lageraufnahme 80 ausgebildet. Das Lager 44, das vorzugsweise als Wälzlager ausgebildet ist, ist der Abtriebswelle 32 zugeordnet; die Abtriebswelle 32 durchragt den Innenring des Lagers 44 und ist drehfest in der Nabe 43 des Schwungrades 33 festgelegt. Das aus dem Lager 44 herausragende Ende der Abtriebswelle 32 trägt das Antriebsritzel 30. Das Lager 44 verschließt den Getrieberaum 31 zum Rotationsraum 37.

Die zweite Lagerstelle 35, nämlich das Lager 44 liegt im Fußbereich des zylindrischen Doms 45, dessen zum Rotationsraum 37 offenes Ende von dem Lager 46 der Lagerstelle 36 verschlossen ist. Der vorzugsweise mit Fett gefüllte Getrieberaum 31 ist zumindest durch das Lager 44 der zweiten Lagerstelle 35 weitgehend dicht gegen den Rotationsraum 37 verschlossen, so dass kein Fett des Getrieberaums 31 in den Rotationsraum 37 übertreten kann. Das Lager 46 der ersten Lagerstelle 36 bildet eine weitere Abschottung gegenüber dem Getrieberaum 31, so dass ein Fettübertritt aus dem Getrieberaum 31 in den Rotationsraum 37 durch die zwei axial hintereinander angeordneten Lager 44 und 46 vermieden ist.

Die Rotationsachse 34 des Schwungrades 33 und die Drehachse 41 der Motorwelle 42 des Elektromotors 40 liegen im Wesentlichen gleichachsig zueinander. Die Motorwelle 42 wird mit dem Schwungrad 33 drehfest verbunden, wozu zweckmäßig die Motorwelle 42 auf dem der Abtriebswelle 32 gegenüberliegenden Ende der Nabe 43 in diese eingesteckt ist; mit dem Einstecken in die Nabe 43 ist die Motorwelle 42 drehfest mit dem Schwungrad 33 verbunden. Das Schwungrad 33 bildet somit ein Drehmoment übertragendes Verbindungsglied zwischen der Motorwelle 42 des Elektromotors 40 und der Abtriebswelle 32, die das im Getrieberaum 31 angeordnete Antriebsritzel 30 trägt. Die Abtriebswelle 32 und die Motorwelle 42 sind auch in Axialrichtung in der Nabe 43 fixiert.

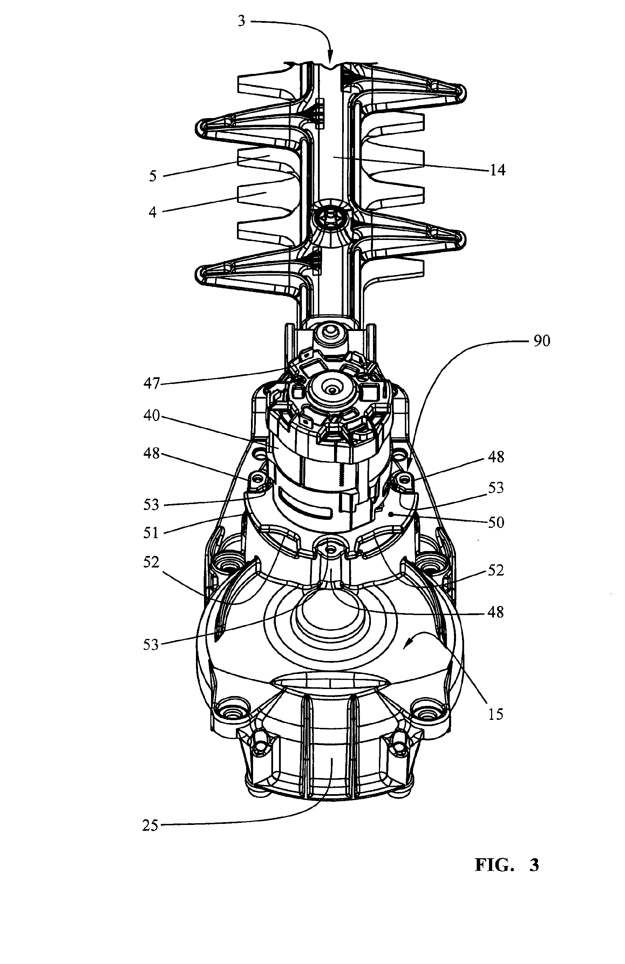

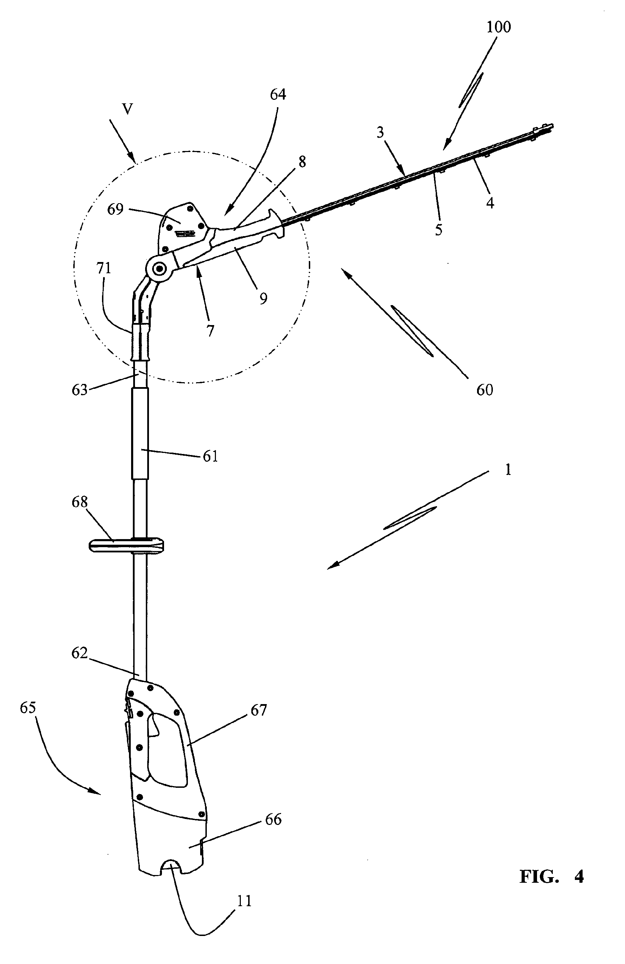

Zwischen dem Elektromotor 40 und dem Schwungrad 33 liegt eine Lagerplatte 50, die auf der dem Schwungrad 33 zugewandten Stirnseite 49 des Elektromotors 40 befestigt ist. Es kann auch eine Anordnung der Lagerplatte auf der dem Schwungrad abgewandten Seite des Elektromotors vorteilhaft sein. Die im Ausführungsbeispiel gezeigte Lagerplatte 50 hat, wie in Fig. 3 dargestellt, eine etwa kreisförmige Grundform und ist scheibenartig ausgebildet. Im Umfangsrand 51 der Lagerplatte 50 sind Aussparungen 52 und 53 ausgebildet. Die Aussparungen 53 sind für eine erste Einbaulage in einem ersten Arbeitsgerät 1 (Fig. 1 bis 3) und die Aussparungen 52 für eine zweite Einbaulage in einem zweiten Arbeitsgerät 1 (Fig. 4 bis 6) vorgesehen. Zugleich ist durch die Aussparungen 52, 53 eine dämpfende Wirkung bei auftretenden Drehmomentstößen gegeben; die Abschnitte des Umfangsrandes 51 zwischen zwei Aussparungen bilden Drehmomentdämpfer. Im Ausführungsbeispiel nach den Fig. 1 bis 3 greifen Vorsprünge 48 des Gehäuses 7 bzw. der Umfangswand 38 in die Aussparungen 53 ein, die als in Richtung der Drehachse 41 des Elektromotors 40 vorstehende Überstände der Umfangswand 38 ausgebildet sind. Die jeweils nicht genutzten Aussparungen 52 dienen der dämpfenden Wirkung der Lagerplatte 50. Die durch die Vorsprünge 48 drehfest im Gehäuse 7 festliegende Lagerplatte 50 bildet eine Drehmomentstütze 90 für den Elektromotor 40. Anstelle der Lagerplatte kann auch ein Stift, ein Gehäusevorsprung, eine Nase des Motors oder dgl. den Elektromotor in Drehrichtung abstützen.

Die axial unverlierbar in die Nabe 43 drehfest eingesteckte Motorwelle 42 fixiert den Elektromotor 40 axial im Gehäuse 7, wobei zugleich eine Ausrichtung der Drehachse 41 der Motorwelle 42 zur Rotationsachse 34 des Schwungrades 33 gegeben ist. In dieser Stecklage liegt die Lagerplatte 50 des Motors auf dem oberen Rand der Umfangswand 38 auf, wobei die Vorsprünge 48 in die Aussparungen 53 der Lagerplatte 50 einragen. Die Lagerplatte 50 liegt somit drehfest am Grundträger 25 fest und bildet eine den Rotationsraum 37 zum Elektromotor 40 abgrenzende Wand, die vollständig oder auch teilweise geschlossen sein kann. Im Ausführungsbeispiel ist die Wand durch die Aussparungen 52, 53 und ggf. andere Öffnungen teilweise durchbrochen. Da die Lagerplatte 50 drehfest zwischen den Vorsprüngen 48 liegt, bildet die Lagerplatte 50 die Drehmomentstütze 90 des Elektromotors 40, ohne dass der Elektromotor 40 durch weitere Befestigungsmaßnahmen am Grundträger 25 oder im Gehäuse 7 zu fixieren ist. Der Elektromotor 40 ist im Gehäuse 7 nur über diese Drehmomentstütze 90 festgelegt.

Die Lagerplatte 50 ist vorzugsweise aus einem formstabilen Material gebildet, insbesondere aus Kunststoff oder aus Metall. In besonderer Ausgestaltung der Erfindung ist die Lagerplatte 50 aus einem elastischen Material gebildet, so dass sie gleichzeitig einen Drehmomentdämpfer bildet, welcher das vom Elektromotor 40 auf das Getriebe übertragene Drehmoment ebenso dämpft wie ein vom Getriebe 15 auf den Elektromotor 40 rückwirkendes Moment, z. B. beim Blockieren der Schneidmesser 4, 5 oder dgl.. Die Lagerplatte 50 bildet einen Dämpfer im Antriebsstrang zwischen Elektromotor 40 und dem Kurbeltrieb des Getriebes 15 bzw. den angetriebenen Schneidmessern 4 und 5.

Die Drehachse 41 des Elektromotors 40 bzw. die Rotationsachse 34 der Abtriebswelle 32 stehen auf der durch die Schneidmesser 4 und 5 bestimmten Schnittebene 6. Die Hauptdrehachse 23 des Kurbeltriebs 15 und die Rotationsachse 34 des Schwungrades 33 liegen zueinander parallel, wobei der Elektromotor 40 zwischen dem Getriebe 15 und dem Messerbalken 3 angeordnet ist. Das Getriebe 15 bildet - wie Fig. 3 zeigt - in Längsrichtung des Messerbalkens 3 den hinteren Teil des Grundträgers 25 (Fig. 2).

Die Aussparungen 52, 53 im Umfangsrand 51 der Lagerplatte 50 und die Vorsprünge 48 der Umfangswand 38 des Rotationsraums 37 sind zweckmäßig derart aufeinander abgestimmt, dass die Lagerplatte 50 nur in ausgewählten Drehlagen auf die Umfangswand 38 aufgesetzt werden kann. Dadurch wird sichergestellt, dass die elektrischen Anschlüsse 47 des Elektromotors 40 lagerichtig im Gehäuse 7 liegen, was insbesondere bei der Verwendung von elektronisch kommutierten Elektromotoren von Vorteil ist.

Der Elektromotor 40 kann ein beliebiger Gleichstrommotor sein, vorteilhaft ist der Elektromotor 40 als elektronisch kommutierter Motor ausgebildet.

Da die Lager 24, 28, 44, 46 der Antriebseinheit im Grundträger 25 vorgesehen sind, werden die beim Antrieb entstehenden Radial- und Axialkräfte auf die Abtriebswelle 32 von den Lagerstellen 35 und 36 am Grundträger 25 aufgenommen, so dass die Lager der Motorwelle 42 im Elektromotor 40 selbst keine größeren Kräfte aufnehmen müssen. Daher können bei dem Arbeitsgerät 1 Standardmotoren als Antrieb verwendet werden.

In den Figuren 4 bis 6 ist als Arbeitsgerät 1 ein Heckenschneider 60 wiedergegeben, der ein vorzugsweise als Teleskoprohr ausgebildetes Führungsrohr 61 umfasst, welches an einem Ende 62 eine Bedieneinheit 65 und am anderen Ende 63 einen Antriebskopf 64 trägt.

Die Bedieneinheit 65 besteht im Wesentlichen aus einem Gehäuse 66 mit einem Aufnahmeschacht für einen Akku 11, der den im Antriebskopf 64 angeordneten Elektromotor mit Spannung versorgt. Die Bedieneinheit 65 weist einen Griff 67 auf, der als hinterer Handgriff in Längsrichtung des Führungsrohrs 61 ausgerichtet liegt. Am Führungsrohr selbst ist zwischen dem Antriebskopf 64 und der Bedieneinheit 65 ein Bügelgriff 68 als zweiter Handgriff vorgesehen.

Die im Antriebskopf 64 verwendete Antriebseinheit 10 entspricht der des Ausfiihrungsbeispiels nach den Figuren 1 bis 3; für gleiche Teile sind gleiche Bezugszeichen verwendet.

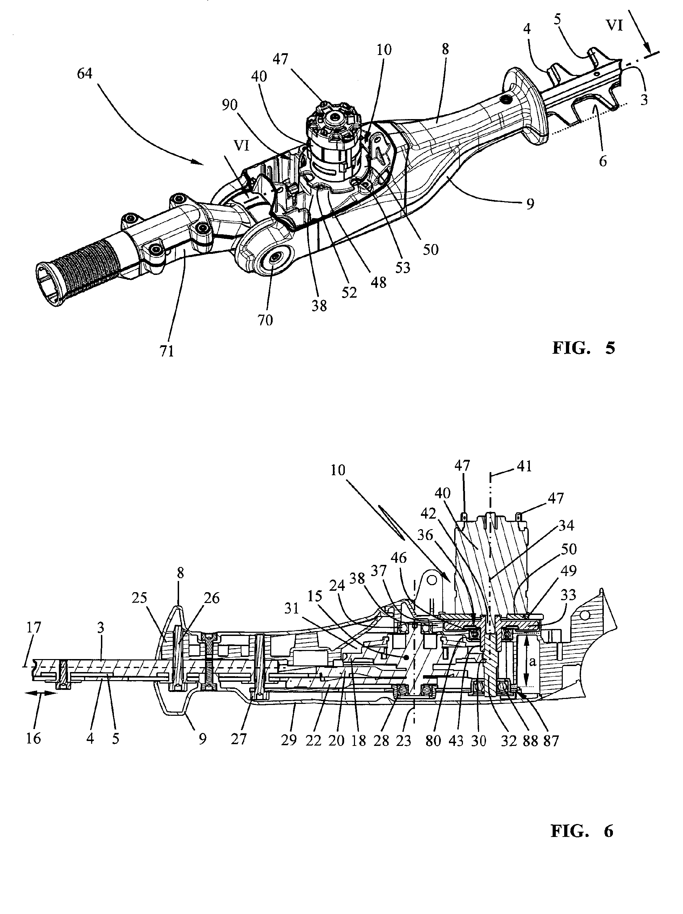

Der Antriebskopf 64 umfasst einen Elektromotor 40 (Figuren 5 und 6), der als Arbeitswerkzeug 100 an einem Messerbalken 3 geführte Schneidmesser 4 und 5 antreibt.

Das Gehäuse 7 des Antriebskopfes 64 besteht aus einem Gehäuseoberteil 8 und einem Gehäuseunterteil 9, wobei der Elektromotor 40 durch eine am Grundträger 25 des Gehäuses 7 befestigte Motorabdeckung 69 geschlossen ist.

Der Antriebskopf 64 ist über ein Drehgelenk 70 mit einem Anschlussstück 71 verbunden, welches das Ende 63 des Führungsrohrs 61 aufnimmt. Der Antriebskopf 64 mit seinem Grundträger 25 kann somit - wie auch Fig. 4 zeigt - zum Führungsrohr 61 abgewinkelt werden.

Entsprechend dem Ausführungsbeispiel nach den Figuren 1 bis 3 ist im Grundträger 25 der Getrieberaum 31 ausgebildet, wobei das Getriebe 15 zwischen dem Elektromotor 40 und dem Messerbalken 3 liegt. Die Rotationsachse 34 des Schwungrades 33 steht ebenso wie die Hauptdrehachse 23 des Getriebes 15 senkrecht zu der von den Schneidmessern 4 und 5 gebildeten Schnittebene 6; bevorzugt sind die Hauptdrehachse 23 und die Rotationsachse 34 des Schwungrades 33 lotrecht zur Schnittebene 6 ausgerichtet. Entsprechend können auch die Hauptdrehachse 23 und die Rotationsachse 34 im Ausführungsbeispiel nach den Figuren 1 bis 3 lotrecht zur Schnittebene 6 liegen.

In Abweichung zum Ausführungsbeispiel nach den Figuren 1 bis 3 ist eine weitere Lagerstelle 87 der Antriebswelle 32 nicht im Grundträger 25, sondern in der Abschlussplatte 29 ausgebildet. Die Abtriebswelle 32 durchragt somit den Getrieberaum 31 im Wesentlichen über seine gesamte Höhe, wobei die Abtriebswelle 32 an dem einen Ende in die Nabe 43 des Schwungrades 33 axial unverlierbar und drehfest eingreift und an ihrem anderen Ende in dem Lager 88 der weiteren Lagerstelle 87 gehalten ist. Das Antriebsritzel 30 liegt zwischen der Nabe 43 und der weiteren Lagerstelle 87.

Die Nabe 43 des Schwungrades 33 ist über die erste Lagerstelle 36, also das Lager 46 im Grundträger 25 gelagert, wobei das Lager 46 in einer entsprechenden Lageraufnahme 80 im Boden des Rotationsraums 37 angeordnet ist. Das Lager 46 verschließt dabei den Getrieberaum 31 relativ zum Rotationsraum 37, so dass ein Übertritt von Fett aus dem Getrieberaum 31 in den Rotationsraum 37 weitgehend vermieden ist.

Die Lagerplatte 50 entspricht in ihrer Ausbildung der nach Fig. 3, wobei die Vorsprünge 48 des Gehäuses 7 jedoch in die zugeordneten Aussparungen 52 im Umfangsrand 51 der Lagerplatte 50 eingreifen, wie Fig. 5 zeigt. Durch die in die Aussparungen 52 eingreifenden gehäusefesten Vorsprünge 48 wird eine Drehmomentstütze 90 gebildet, die den Elektromotor 40 in Antriebsrichtung abstützt, so dass ein antreibendes Motormoment auf das Getriebe 15 übertragen werden kann.

Die Lagerung der Hauptdrehachse 23 des Kurbeltriebs 15 im Getrieberaum 31 entspricht der im Ausführungsbeispiel nach den Figuren 1 und 2 ebenso wie die Lagerung der Lagerplatte 50 im Grundträger 25 des Gehäuses 7. In Abweichung von dem Ausführungsbeispiel der Figuren 1 bis 3 ist die Umfangswand 38 des Rotationsraums 31 vollständig im Grundträger 25 ausgebildet.

## Patentansprüche

1. Tragbares Arbeitsgerät mit einem Gehäuse und einem Arbeitswerkzeug (100), das über ein Getriebe (15) von einem Antrieb (40) angetrieben ist, wobei zwischen dem Antrieb (40) und dem Getriebe (15) ein um eine Rotationsachse (34) rotierendes Schwungrad (33) angeordnet ist, das mit einer in einen Getrieberaum (31) einragenden Abtriebswelle (32) mit einem Antriebsritzel (30) drehfest verbunden ist, wobei die Abtriebswelle (32) und das Schwungrad (33) über zwei Lagerstellen (35, 36) im Gehäuse (2) gelagert sind, **dadurch gekennzeichnet, dass** der Antrieb (40) ein Elektromotor ist, dass die Rotationsachse (34) des Schwungrades (33) und eine Motorwelle (42) des Elektromotors (40) gleichachsig zueinander liegen und die Motorwelle (42) des Elektromotors (40) drehfest mit dem Schwungrad (33) verbunden ist, wobei der Elektromotor (40) darüber hinaus im Gehäuse (2) nur über eine Drehmomentstütze (90) festgelegt ist.

2. Arbeitsgerät nach Anspruch 1,
**dadurch gekennzeichnet, dass** die Lagerstellen (35, 36) in Richtung der Motorwelle (42) mit Abstand (a) zueinander liegen.

3. Arbeitsgerät nach Anspruch 1 oder 2,
**dadurch gekennzeichnet, dass** die Motorwelle (42) axial unverlierbar mit dem Schwungrad (33) verbunden ist.

4. Arbeitsgerät nach einem der Ansprüche 1 bis 3,
**dadurch gekennzeichnet, dass** die Motorwelle (42) in eine zentrale Nabe (43) des Schwungrades (33) eingesteckt ist.

5. Arbeitsgerät nach einem der Ansprüche 1 bis 4,
**dadurch gekennzeichnet, dass** die Drehmomentstütze (90) von einer Lagerplatte (50) des Elektromotors (40) gebildet ist, die drehfest im Gehäuse (2) festliegt.

6. Arbeitsgerät nach Anspruch 5,
**dadurch gekennzeichnet, dass** im Umfangsrand (51) der Lagerplatte (50) Ausnehmungen (52, 53) ausgebildet sind, in die Vorsprünge (48) des Gehäuses (2) einragen.

7. Arbeitsgerät nach Anspruch 5 oder 6,
**dadurch gekennzeichnet, dass** die Lagerplatte (50) aus einem elastischen Material besteht.

8. Arbeitsgerät nach einem der Ansprüche 5 bis 7,
**dadurch gekennzeichnet, dass** die Lagerplatte (50) zwischen dem Elektromotor (40) und dem Schwungrad (33) angeordnet ist.

9. Arbeitsgerät nach einem der Ansprüche 5 bis 8,
**dadurch gekennzeichnet, dass** die Lagerplatte (50) auf einer Stirnseite (49) des Elektromotors (40) festgelegt ist.

10. Arbeitsgerät nach einem der Ansprüche 1 bis 9,
**dadurch gekennzeichnet, dass** das Schwungrad (33) ein Drehmoment übertragendes Verbindungsglied zwischen der Abtriebswelle (32) und der Motorwelle (42) des Elektromotors (40) bildet.

11. Arbeitsgerät nach einem der Ansprüche 5 bis 10,
**dadurch gekennzeichnet, dass** das Schwungrad (33) in einem im Gehäuse (2) ausgebildeten Rotationsraum (37) sowie das Getriebe (15) in einem im Gehäuse (2) ausgebildeten Getrieberaum (31) aufgenommen ist.

12. Arbeitsgerät nach Anspruch 11,
**dadurch gekennzeichnet, dass** die Lagerplatte (50) eine den Rotationsraum (37) zum Elektromotor (40) abgrenzende Wand bildet.

13. Arbeitsgerät nach Anspruch 11 oder 12,
**dadurch gekennzeichnet, dass** der Rotationsraum (37) in einem Grundträger (25) des Gehäuses (2) vorgesehen ist, wobei eine Umfangswand (38) des Rotationsraums (37) zumindest teilweise einteilig am Grundträger (25) ausgebildet ist.

14. Arbeitsgerät nach Anspruch 13,
**dadurch gekennzeichnet, dass** die Umfangswand (38) über einen ersten Wandabschnitt am Grundträger (25) ausgebildet ist und ein zweiter Wandabschnitt (39) der Umfangswand (38) an einem getrennten Gehäuseteil (8) ausgebildet ist, der an dem von dem Schwungrad (33) abgewandten Ende des Elektromotors (40) angeordnet ist.

15. Arbeitsgerät nach einem der Ansprüche 11 bis 14,
**dadurch gekennzeichnet, dass** eine Lagerstelle (36) durch ein im Boden des Rotationsraumes (37) angeordnetes Lager (46) gebildet ist und das Lager (46) den Rotationsraum (37) zu dem Getrieberaum (31) verschließt.

16. Arbeitsgerät nach einem der Ansprüche 11 bis 15,
**dadurch gekennzeichnet, dass** eine weitere Lagerstelle (87) durch ein in einer Abschlussplatte (29) gehaltenes Lager (88) gebildet ist, das am Grundträger (25) befestigt ist.

17. Arbeitsgerät nach einem der Ansprüche 1 bis 16,
**dadurch gekennzeichnet, dass** das Arbeitswerkzeug (100) ein hin- und hergehendes Schneidmesser (4, 5) ist, wobei die Schneidmesser (4, 5) eine Schnittebene (6) bestimmen und die Motorwelle (42) des Elektromotors (40) auf der Schnittebene (6) steht.

18. Arbeitsgerät nach Anspruch 17,
**dadurch gekennzeichnet, dass** die Motorwelle (42) lotrecht auf der Schnittebene (6) steht.

19. Arbeitsgerät nach einem der Ansprüche 1 bis 18,
**dadurch gekennzeichnet, dass** die Hauptdrehachse (23) des Getriebes (15) und die Rotationsachse (34) des Schwungrades (33) zueinander parallel liegen.

## Claims

1. Portable working implement with a housing and a working tool (100) driven via gearbox (15) by a drive (40), wherein a flywheel (33), which rotates about an axis of rotation (34) and which is non-rotatably connected to a drive shaft (32) with a drive pinion (32), which extends into a gear chamber (31), is located between the drive (40) and the gearbox (15), wherein the drive shaft (32) and the flywheel (33) are bearing-mounted in the housing (2) by way of two points of support (35, 36), **characterised in that** the drive (40) is an electric motor, **in that** the axis of rotation (34) of the flywheel (33) and a motor shaft (42) of the electric motor (40) are coaxial, and **in that** the motor shaft (42) of the electric motor (40) is non-rotatably connected to the flywheel (33), the electric motor (40) being moreover located in the housing (2) by way of a reaction member (90) only.

2. Working implement according to claim 1,
**characterised in that** the points of support (35, 36) are arranged at a distance (a) from one another in the direction of the motor shaft (42).

3. Working implement according to claim 1 or 2,
**characterised in that** the motor shaft (42) is connected to the flywheel (33) in an axially captive manner.

4. Working implement according to any of claims 1 to 3,
**characterised in that** the motor shaft (42) is inserted into a central hub (43) of the flywheel (33).

5. Working implement according to any of claims 1 to 4,
**characterised in that** the reaction member (90) is represented by a bearing plate (50) of the electric motor (40), which is non-rotatably fixed in the housing (2).

6. Working implement according to claim 5,
**characterised in that** recesses (52, 53), into which the projections (48) of the housing (2) project, are formed in the circumferential edge (51) of the bearing plate (50).

7. Working implement according to claim 5 or 6,
**characterised in that** the bearing plate (50) is made of an elastic material.

8. Working implement according to any of claims 5 to 7,
**characterised in that** the bearing plate (50) is located between the electric motor (40) and the flywheel (33).

9. Working implement according to any of claims 5 to 8,
**characterised in that** the bearing plate (50) is fixed to an end face (49) of the electric motor (40).

10. Working implement according to any of claims 1 to 9,
**characterised in that** the flywheel (33) forms a torque-transmitting connecting element between the drive shaft (32) and the motor shaft (42) of the electric motor (40).

11. Working implement according to any of claims 5 to 10,
**characterised in that** the flywheel (33) is accommodated in a rotation chamber (37) formed in the housing (2) and the gearbox (15) is accommodated in a gear chamber (31) formed in the housing (2).

12. Working implement according to claim 11,
**characterised in that** the bearing plate (50) forms a wall which separates the rotation chamber (37) from the electric motor (40).

13. Working implement according to claim 11 or 12,
**characterised in that** the rotation chamber (37) is provided in a base support (25) of the housing (2), a circumferential wall (38) of the rotation chamber (37) being at least partially formed integrally on the base support (25).

14. Working implement according to claim 13,
**characterised in that** a first wall section of the circumferential wall (38) is formed on the base support (25) and a second wall section (39) of the circumferential wall (38) is formed on a separate housing part (8), which is located at the end of the electric motor (40) which is remote from the flywheel (33).

15. Working implement according to any of claims 11 to 14,
**characterised in that** a point of support (36) is represented by a bearing (46) provided in the base of the rotation chamber (37), and **in that** the bearing (46) closes the rotation chamber (37) against the gear chamber (31).

16. Working implement according to any of claims 11 to 15,
**characterised in that** a point of support (87) is represented by a bearing (88), which is held in an end plate (29) and secured to the base support (25).

17. Working implement according to any of claims 1 to 16,
**characterised in that** the working tool (100) is a reciprocating cutting blade (4, 5), wherein the cutting blades (4, 5) define a cutting plane (6) and the motor shaft (42) of the electric motor (40) stands on the cutting plane (6).

18. Working implement according to claim 17,
**characterised in that** the motor shaft (42) stands perpendicular on the cutting plane (6).

19. Working implement according to any of claims 1 to 18,
**characterised in that** the main axis of rotation (23) of the gearbox (15) and the axis of rotation (34) of the flywheel (33) are parallel to one another.

## Revendications

1. Appareil de travail portable avec un carter et un outil de travail (100) qui est entraîné par un entraînement (40) par l'intermédiaire d'une transmission (15), étant précisé qu'il est prévu, entre l'entraînement (40) et la transmission (15), un volant (33) qui tourne sur un axe de rotation (34) et qui est relié, fixe en rotation, à un arbre de sortie (32) entrant dans un espace de transmission (31) et pourvu d'un pignon d'entraînement (30), étant précisé que l'arbre de sortie (32) et le volant (33) sont montés dans le carter (2) par l'intermédiaire de deux points d'appui (35, 36), **caractérisé en ce que** l'entraînement (40) est un moteur électrique, **en ce que** l'axe de rotation (34) du volant (33) et un arbre (42) du moteur électrique (40) sont situés sur le même axe, et l'arbre (42) du moteur électrique (40) est relié, fixe en rotation, au volant (33), étant précisé que le moteur électrique (40) est en outre fixé dans le carter (2) uniquement par l'intermédiaire d'un support de couple (90).

2. Appareil de travail selon la revendication 1,
**caractérisé en ce que** les points d'appui (35, 36) présentent un écartement (a) dans le sens de l'arbre de moteur (42).

3. Appareil de travail selon la revendication 1 ou 2,
**caractérisé en ce que** l'arbre de moteur (42) est relié de manière imperdable axialement au volant (33).

4. Appareil de travail selon l'une des revendications 1 à 3,
**caractérisé en ce que** l'arbre de moteur (42) est introduit dans un moyeu central (43) du volant (33).

5. Appareil de travail selon l'une des revendications 1 à 4,
**caractérisé en ce que** le support de couple (90) est formé par une plaque d'appui (50) du moteur électrique (40) qui est bloquée, fixe en rotation, dans le carter (2).

6. Appareil de travail selon la revendication 5,
**caractérisé en ce qu'**il est prévu dans le bord périphérique (51) de la plaque d'appui (50) des creux (52, 53) dans lesquels entrent des saillies (48) du carter (2).

7. Appareil de travail selon la revendication 5 ou 6,
**caractérisé en ce que** la plaque de montage (50) se compose d'un matériau élastique.

8. Appareil de travail selon l'une des revendications 5 à 7,
**caractérisé en ce que** la plaque de montage (50) est disposée entre le moteur électrique (40) et le volant (33).

9. Appareil de travail selon l'une des revendications 5 à 8,
**caractérisé en ce que** la plaque d'appui (50) est bloquée sur un côté frontal (49) du moteur électrique (40).

10. Appareil de travail selon l'une des revendications 1 à 9,
**caractérisé en ce que** le volant (33) forme un organe de liaison, transmettant un couple de rotation, entre l'arbre de sortie (32) et l'arbre (42) du moteur électrique (40).

11. Appareil de travail selon l'une des revendications 5 à 10,
**caractérisé en ce que** le volant (33) est logé dans un espace de rotation (37) formé dans le carter (2), et la transmission (15) est logée dans un espace de transmission (31) formé dans le carter (2).

12. Appareil de travail selon la revendication 11,
**caractérisé en ce que** la plaque d'appui (50) forme une paroi qui délimite l'espace de rotation (37) par rapport au moteur électrique (40).

13. Appareil de travail selon la revendication 11 ou 12,
**caractérisé en ce que** l'espace de rotation (37) est prévu dans un support de base (25) du carter (2), étant précisé qu'une paroi périphérique (38) de l'espace de rotation (37) est formée au moins en partie d'une seule pièce sur le support de base (25).

14. Appareil de travail selon la revendication 13,
**caractérisé en ce que** la paroi périphérique (38), sur une section de paroi, est formée sur le support de base (25), et une deuxième section de paroi (39) de la paroi périphérique (38) est formée sur une partie de carter (8) séparée qui est disposée à l'extrémité du moteur électrique (40) opposée au volant (33).

15. Appareil de travail selon l'une des revendications 11 à 14,
**caractérisé en ce qu'**un point d'appui (36) est formé par un palier (46) disposé dans le fond de l'espace de rotation (37), et le palier (46) obture l'espace de rotation (37) par rapport à l'espace de transmission (31).

16. Appareil de travail selon l'une des revendications 11 à 15,
**caractérisé en ce qu'**un point d'appui (87) est formé par un palier (88) qui est retenu dans une plaque terminale (29) et qui est fixé au support de base (25).

17. Appareil de travail selon l'une des revendications 1 à 16,
**caractérisé en ce que** l'outil de travail (100) est une lame de coupe (4, 5) qui décrit un mouvement de va-et-vient, étant précisé que les lames de coupe (4, 5) définissent un plan de coupe (6) et que l'arbre (42) du moteur électrique (40) est situé sur le plan de coupe (6).

18. Appareil de travail selon la revendication 17,
**caractérisé en ce que** l'arbre de moteur (42) est perpendiculaire au plan de coupe (6).

19. Appareil de travail selon l'une des revendications 1 à 18,
**caractérisé en ce que** l'axe de rotation principal (23) de la transmission (15) et l'axe de rotation (34) du volant (33) sont parallèles.
